(19)

Europäisches
Patentamt
European
Patent Office
Office européen
des brevets

(11) **EP 4 488 885 A1**

(12) **EUROPEAN PATENT APPLICATION**

(43) Date of publication:
**08.01.2025 Bulletin 2025/02**

(21) Application number: **24183353.2**

(22) Date of filing: **20.06.2024**

(51) International Patent Classification (IPC):
**G06N 5/01** (2023.01)     **G06N 10/60** (2022.01)

(52) Cooperative Patent Classification (CPC):
**G06N 5/01; G06N 10/60**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **04.07.2023 JP 2023109786**

(71) Applicant: **FUJITSU LIMITED**
**Kawasaki-shi, Kanagawa 211-8588 (JP)**

(72) Inventor: **TOMITA, Yoshinori**
**Kawasaki-shi, Kanagawa, 211-8588 (JP)**

(74) Representative: **Hoffmann Eitle**
**Patent- und Rechtsanwälte PartmbB**
**Arabellastraße 30**
**81925 München (DE)**

(54) **DATA PROCESSING PROGRAM, DATA PROCESSING METHOD, AND DATA PROCESSING DEVICE**

(57)     A data processing program for causing the computer to execute: acquiring information indicating a problem of arranging a plurality of items in a predetermined region; generating, for each of the plurality of items, a plurality of states according to a position at which the item is arranged in the area based on the information; specifying pairs of two items included in the plurality of items, and calculating an evaluation function indicating an evaluation value according to a combination of states of the two items in the specified pairs; generating, for combinations of the states of the plurality of items, an Ising-type objective function including a cost term indicating a sum of the evaluation values of each of the pairs indicated by the evaluation function; and acquiring a solution that corresponds to the problem by using a search unit that searches for the solution based on the objective function.

FIG. 1

EP 4 488 885 A1

## Description

FIELD

The embodiments discussed herein are related to a data processing program, a data processing method, and a data processing device.

BACKGROUND

As a device that calculates a combinatorial optimization problem, there is an Ising machine that searches for a solution based on an Ising-type objective function. The objective function is represented in a quadratic unconstrained binary optimization (QUBO) format. The objective function may also be referred to as an energy function. In finding a solution by the Ising machine, for example, simulated annealing (SA), quantum annealing (QA), or the like is used. The Ising machine is a type of a QUBO solver.

For example, there is a proposal of an optimization device that solves a multi-objective optimization problem by annealing such as SA or QA. The proposed optimization device executes solution search by using a multi-point search method based on a plurality of intermediate solutions present on the way to an optimal solution obtained by annealing, thereby enabling obtainment of solutions having a satisfactory value for at least one objective function with respect to each of a plurality of objective functions.

Note that there is a proposal of a system that is trained using initialization rules for obtaining an optimal initialization value used in optimization algorithm such as gradient descent by machine learning using a problem solved by the optimization algorithm and a solution thereof.

Furthermore, there is a proposal of a system that obtains a solution of a combinatorial optimization problem by a method referred to as a quantum quench algorithm. Moreover, there is a proposal of an optimal solution search device that finds a plurality of approximate solutions each of which is not an optimal solution but approximate to the optimal solution by a simple arithmetic operation in which an arithmetic operation for obtaining the optimal solution is simplified, and searches for the optimal solution by genetic algorithm with a solution group including the approximate solutions as an initial population.

Japanese Laid-open Patent Publication No. 2022-118555, U.S. Patent Application Publication No. 2022/0164644, U.S. Patent Application Publication No. 2020/0202249, and Japanese Laid-open Patent Publication No. 2022-79376 are disclosed as related art.

SUMMARY

TECHNICAL PROBLEM

As a combinatorial optimization problem, there is a problem of arranging a plurality of items in a predetermined region. Examples of such a problem include a packing problem, a scheduling problem, and the like. However, it is difficult to accurately express constraint conditions such as shapes of the items and positions where the items may be arranged in the problem by QUBO, and a solution may not be efficiently found using the Ising machine.

In one aspect, an object of an embodiment is to improve efficiency of finding a solution.

SOLUTION TO PROBLEM

According to an aspect of the embodiments, there is provided a data processing program including instructions which, when executed by a computer, cause the computer to execute processing including: acquiring information that indicates a problem of arranging a plurality of items in a predetermined region; generating, for each of the plurality of items, a plurality of states according to a position at which the item is arranged in the area based on the information; specifying a plurality of pairs of two items included in the plurality of items, and calculating an evaluation function that indicates an evaluation value according to a combination of states of the two items in the plurality of specified pairs; generating, for combinations of the states of the plurality of items, an Ising-type objective function that includes a cost term that indicates a sum of the evaluation values of each of the plurality of pairs indicated by the evaluation function; and acquiring a solution that corresponds to the problem by using a search unit that searches for the solution based on the objective function.

ADVANTAGEOUS EFFECTS OF INVENTION

In one aspect, efficiency of finding a solution may be improved.

BRIEF DESCRIPTION OF DRAWINGS

FIG. 1 is a diagram for describing a data processing device of a first embodiment;
FIG. 2 is a diagram illustrating an example of hardware of a data processing system of a second embodiment;
FIG. 3 is a diagram illustrating an example of input data of a combinatorial optimization problem;
FIG. 4 is a diagram illustrating an example of a solution of the combinatorial optimization problem;
FIG. 5 is a diagram illustrating a functional example of a data processing device;
FIG. 6 is a flowchart illustrating an example of main processing;
FIG. 7 is a flowchart illustrating an example of solution finding processing of an approximation problem;
FIG. 8 is a diagram illustrating an example of data conversion for the input data of the combinatorial optimization problem;
FIG. 9 is a diagram illustrating an example of state generation of an item;
FIG. 10 is a diagram illustrating examples of evaluation functions calculated for two items;
FIG. 11 is a diagram illustrating a first calculation example of the evaluation functions calculated for the two items;
FIG. 12 is a diagram illustrating a second calculation example of the evaluation functions calculated for the two items;
FIG. 13 is a diagram illustrating a flow of finding a solution using a quadratic unconstrained binary optimization (QUBO) solver;
FIG. 14 is a diagram illustrating examples of tetrominoes;
FIG. 15 is a diagram illustrating an example of the input data (part 1);
FIG. 16 is a diagram illustrating examples of the solution obtained from the QUBO solver (part 1);
FIG. 17 is a diagram illustrating an example of the input data (part 2);
FIG. 18 is a diagram illustrating examples of the solution obtained from the QUBO solver (part 2);
FIG. 19 is a diagram illustrating an application example to a scheduling problem; and
FIG. 20 is a diagram illustrating an application example to a vehicle routing problem.

DESCRIPTION OF EMBODIMENTS

Hereinafter, the present embodiments will be described with reference to the drawings.

[First Embodiment]

A first embodiment will be described.

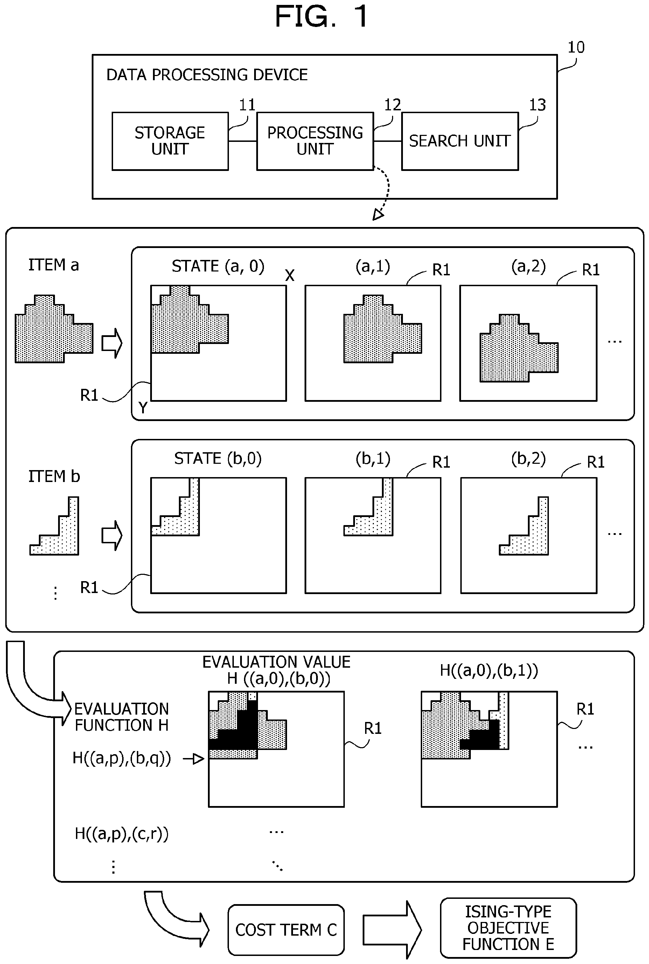

FIG. 1 is a diagram for describing a data processing device of the first embodiment.
A data processing device 10 is used to find a solution of a combinatorial optimization problem. The data processing device 10 includes a storage unit 11, a processing unit 12, and a search unit 13. The storage unit 11 may be a volatile storage device such as a random access memory (RAM), or may be a nonvolatile storage device such as a hard disk drive (HDD) or a flash memory. The processing unit 12 may include a central processing unit (CPU), a digital signal processor (DSP), an application specific integrated circuit (ASIC), a field programmable gate array (FPGA), a graphics processing unit (GPU), and the like. The processing unit 12 may be a processor that executes a program. The "processor" may include a set of a plurality of processors (multiprocessor).
The search unit 13 is a quadratic unconstrained binary optimization (QUBO) solver that executes quantum annealing (QA) or simulated annealing (SA). The search unit 13 is implemented by a quantum processor that executes QA, a GPU or an FPGA that executes SA, or the like. The search unit 13 may be implemented by a processor such as a CPU executing a program. Furthermore, the search unit 13 may be provided in a device separate from the data processing device 10. In that case, the data processing device 10 and the device including the search unit 13 are communicably coupled.
Here, the combinatorial optimization problem is formulated by an Ising-type objective function and is replaced with, for example, a problem of minimizing a value of an objective function. The objective function may be referred to as an energy function or the like. The objective function includes a plurality of state variables. The state variable is a binary variable taking a value of 0 or 1, and may be referred to as a bit. A solution of the combinatorial optimization problem is represented by values of a plurality of state variables. A solution that minimizes the value of the objective function represents a ground state of an Ising model, and corresponds to an optimal solution of the combinatorial optimization problem. The value of the objective function may be referred to as energy.
The Ising-type objective function is represented by Expression (1).
[Expression 1]

$$E(\mathbf{s}) = -\frac{1}{2}\mathbf{s}^T\mathbf{W}\mathbf{s} - \mathbf{b}^T\mathbf{s} + c$$

$$= -\frac{1}{2}\sum_{i=0}^{n-1}\sum_{j\neq i} W_{ij}s_i s_j - \sum_{i=0}^{n-1} b_i s_i + c \qquad (1)$$

A state vector s has the plurality of state variables as elements and represents a state of the Ising model. Expression (1) is an objective function formulated in a QUBO format. In the case of a problem of maximizing the energy, it is sufficient to reverse a sign of the objective function. The values of the plurality of state variables belonging to the state vector s are stored in the storage unit 11.

The first term on the right side of Expression (1) is to integrate, for all combinations of two state variables selectable from among all the state variables, products of values of the two state variables and a weighting coefficient without omission and overlap. Indices of the state variables are denoted by subscripts i and j. An i-th state variable is denoted by $s_i$. A j-th state variable is denoted by $s_j$. A coupling coefficient matrix is denoted by W. A coupling coefficient indicating a weight or strength of coupling between the i-th state variable and the j-th state variable is denoted by $W_{ij}$, which is an element of W. $W_{ij} = W_{ji}$ and $W_{ii} = 0$ are satisfied.

The second term on the right side of Expression (1) is to obtain a total sum of products of the respective biases for all the state variables and the values of the state variables. A vector having $b_i$ as an element is denoted by b. A bias for the i-th state variable is denoted by $b_i$. A constant is denoted by c. Expression (1) is represented as Expression (2) when expanded.

[Expression 2]

$$\begin{aligned} E(\mathbf{s}) = & - W_{0,1}s_0 s_1 - W_{0,2}s_0 s_2 - W_{0,3}s_0 s_3 - \cdots \\ & - W_{1,2}s_1 s_2 - W_{1,3}s_1 s_3 - W_{1,4}s_1 s_4 - \cdots \\ & \cdots \\ & - W_{n-2,n-1}s_{n-2}s_{n-1} \\ & - b_0 s_0 - b_1 s_1 - b_2 s_2 - \cdots \\ & + c \end{aligned} \qquad (2)$$

As the combinatorial optimization problem, there is a problem of arranging a plurality of items in a predetermined region. Examples of such a problem include a packing problem, a scheduling problem, and the like. For example, in the packing problem, a package is an example of the item, and an internal space such as a box or a warehouse for packing the package is an example of the region. Furthermore, in the scheduling problem, a resource to be scheduled, such as a staff or a device, is an example of the item, and a time frame (time domain) to which the resource is allocated is an example of the region. The region may be represented two-dimensionally or three-dimensionally. For these problems, by using the search unit 13, the data processing device 10 acquires solutions to, for example, efficiently arrange the respective items so as not to overlap each other in the corresponding region.

The storage unit 11 stores information indicating a problem of arranging a plurality of items in a predetermined region as described above. For example, the processing unit 12 may acquire the information input to the data processing device 10 and store the information in the storage unit 11. Alternatively, the information may be created by the processing unit 12 as information indicating an approximation problem obtained by simplifying the original combinatorial optimization problem.

For example, it is assumed that the information indicates a problem of arranging items a, b, c, ... in a region R1. The information includes information regarding a size of the region R1 and a shape of each of the items a, b, c, .... It is assumed that the region R1 is a region in an XY plane. It is assumed that a direction from left to right toward the region R1 is a positive direction of an X axis, and a direction from top to bottom is a positive direction of a Y axis. Furthermore, it is assumed that an upper left vertex of the region R1 is an origin of XY coordinates. In this case, the size of the region R1 is represented by a length in the X-axis direction and a length in the Y-axis direction.

The shape of the item may be represented by a bitmap in the case of a planar figure, or may be represented by a voxel in the case of a three-dimensional figure. Furthermore, the shape of the item may be represented by a function indicating a curve or the like. In FIG. 1, an example in which the shape of the item is represented by a bitmap is illustrated.

The processing unit 12 generates, for each of the plurality of items, a plurality of states according to a position where the item is arranged in the object region based on the information stored in the storage unit 11. In the example of FIG. 1, the state of the item is represented by which XY coordinates in the region R1 the corresponding item is arranged at. In a case where rotation of the item is allowed, the state may include information regarding a rotation angle of the item. The processing unit 12 generates, for each arrangement that may be taken by the corresponding item in the region R1, the state corresponding to the arrangement. Therefore, the state of the item may be referred to as an arrangement state of the item.

For example, the processing unit 12 generates states (a, 0), (a, 1), (a, 2), ... for the item a. A numerical value (such as "0" or "1") on the right side in (a, 0) or (a, 1) is an index for identifying the state of the item a. A set including these states (a, 0), (a, 1), (a, 2), ... as elements is a state set for the item a.

Furthermore, the processing unit 12 generates states (b, 0), (b, 1), (b, 2), ... for the item b.

The number of elements of a state set of a certain item may be different from the number of elements of a state set of another item. The processing unit 12 similarly generates a plurality of states also for other items.

For a pair of items included in the plurality of items, the processing unit 12 calculates an evaluation function H indicating an evaluation value according to a combination of states of the two items in the pair. The evaluation function is calculation processing of receiving the states of the two items as input and returning a numerical value (evaluation value) as output. The evaluation function may be given as input data of the combinatorial optimization problem, or may be specified by the input data from among a plurality of types of predetermined processing defined in advance. For example, for the two items a and b, a combination of the states is represented as ((a, p), (b, q)). An index of the state of the item a is denoted by p. An index of the state of the item b is denoted by q. For the pair of items a and b, the evaluation function H is represented as H = H((a, p), (b, q)).

In an example, the evaluation value indicated by the evaluation function indicates a size of an overlapping region of the two items according to the states of the two items, in other words, a size of the overlap. The overlapping region indicates a portion where the two items overlap each other in the region R1. The size of the overlapping region may be represented by the number of pixels. In this case, the evaluation function H((a, p), (b, q)) is a function that outputs the size of the overlapping region as the evaluation value for each combination of all the states of the items a and b. The evaluation value includes an evaluation value H((a, 0), (b, 0)) for a combination {(a, 0), (b, 0)}, an evaluation value H((a, 0), (b, 1)) for a combination {(a, 0), (b, 1)}, and the like. In FIG. 1, as an example, an overlapping region corresponding to the evaluation value H((a, 0), (b, 0)) and an overlapping region corresponding to the evaluation value H((a, 0), (b, 1)) are illustrated in black.

Furthermore, the evaluation value represented by the evaluation function may include a size of a closed region formed by the two items according to the states of the two items, in other words, the size of the closed region. The closed region indicates a portion in the region R1, which is surrounded by the two items and in which no other item is arranged. The size of the closed region may be represented by the number of pixels.

In this manner, a plurality of evaluation functions may be used. For example, when it is assumed that the evaluation function regarding the overlapping region is an evaluation function E1 and the evaluation function regarding the closed region is an evaluation function E2, the entire evaluation function H may be represented by a linear combination of E1 and E2 as H = $\alpha \times$ E1 + $\beta \times$ E2. Coefficients indicating weights of E1 and E2 are denoted by $\alpha$ and $\beta$, respectively. Note that H = E1 or H = E2 may be satisfied. Alternatively, the entire evaluation function may be defined as a linear combination of three or more evaluation functions. As an evaluation function other than the evaluation functions E1 and E2, for example, a function that sets the evaluation value to a positive predetermined value in a case where an interval between items is smaller than a certain value for a specific pair of items, and sets the evaluation value to 0 in other cases, or the like may be considered.

The processing unit 12 generates, for combinations of the states of the plurality of items, an Ising-type objective function E including a cost term C indicating a sum of the evaluation values for each pair of items indicated by the evaluation function. The objective function E is represented by Expression (1), and is calculated as follows, for example.

First, one item does not have a plurality of states at the same time. Therefore, the processing unit 12 may include, in the objective function E, a constraint term $C_{oh}$ indicating that a certain item does not have a plurality of states at the same time. The constraint term $C_{oh}$ is a sum over all the items of a constraint expression $C_{oh,i}$ for each item. The constraint expression $C_{oh,i}$ is represented by Expression (3). The constraint term $C_{oh}$ is represented by Expression (4). Note that "oh" is an abbreviation for "one-hot", which means that there is only one value 1 among a plurality of numerical values and the rest are all values 0, and at that time, the constraint expression $C_{oh,i}$ is 0.

[Expression 3]

$$C_{oh,i}(X) = \left( \sum_{s \in S(i)} x_{i,s} - 1 \right)^2 \qquad (3)$$

[Expression 4]

$$C_{oh}(X) = \sum_{i \in \text{all items}} C_{oh,i}(X)$$

$$= \sum_{i \in \text{all items}} \left( \sum_{s \in S(i)} x_{i,s} - 1 \right)^2 \qquad (4)$$

Here, a state vector having a state variable $x_{i,s}$ as an element is denoted by X. A state variable corresponding to a state s of an item i is denoted by $x_{i,s}$. Note that the state s represents the state of the item, and is different from the state vector s in Expressions (1) and (2). The state variable $x_{i,s}$ corresponds to the state variable $s_i$ in Expression (1). By $x_{i,s} = 1$, it is indicated that the state of the item i is s. By $x_{i,s} = 0$, it is indicated that the state of the item i is not s. A state set of the item i is denoted by S(i).

Furthermore, for example, a cost term $C_{ow}$ regarding the overlapping region of the two items is represented by Expression (5) using the evaluation function E1. Note that "ow" is an abbreviation for "overwrap".

[Expression 5]

$$C_{ow}(X) = \sum_{\substack{i,j \in \text{all items} \\ si \in S(i), sj \in S(j)}} E1(si, sj) \cdot x_{i,si} \cdot x_{j,sj} \qquad (5)$$

A state si $\in$ S(i), which is an element of a state set S(i) of the item i, indicates an si-th state of the item i. A state sj $\in$ S(j), which is an element of a state set S(j) of an item j, indicates an sj-th state of the item j.

Moreover, for example, a cost term $C_{ds}$ regarding the closed region of the two items is represented by Expression (6) using the evaluation function E2. Note that "ds" is an abbreviation for "dead space".

[Expression 6]

$$C_{ds}(X) = \sum_{\substack{i,j \in \text{all items} \\ si \in S(i), sj \in S(j)}} E2(si, sj) \cdot x_{i,si} \cdot x_{j,sj} \qquad (6)$$

The objective function E is represented by Expression (7) using the constraint term $C_{oh}$ and the cost terms $C_{ow}$ and $C_{ds}$.

[Expression 7]

$$E(X) = W_1 C_{oh}(X) + W_2 C_{ow}(X) + W_3 C_{ds}(X) \qquad (7)$$

Coefficients indicating weights of the constraint term $C_{oh}$ and the cost terms $C_{ow}$ and $C_{ds}$ are denoted by $W_1$, $W_2$, and $W_3$, respectively. In this case, each of the cost terms $C_{ow}$ and $C_{ds}$ may be considered as an example of the cost term C described above. Alternatively, a linear combination of the cost terms $C_{ow}$ and $C_{ds}$ may be considered as an example of the cost term C described above. The processing unit 12 obtains Expression (1) in the QUBO format from Expression (7).

The processing unit 12 acquires a solution corresponding to the problem by using the search unit 13. The processing unit 12 inputs information indicating an objective function E(X) to the search unit 13, causes the search unit 13 to execute finding of a solution based on the objective function E(X), and acquires the solution obtained as a result from the search unit 13. The search unit 13 searches for a solution having a smaller value of the objective function E(X), in other words, energy. The processing unit 12 acquires and outputs the solution searched for by the search unit 13.

Note that, in a case where the corresponding problem is an approximation problem corresponding to the original combinatorial optimization problem, the processing unit 12 may generate an initial solution to be used for finding a solution of the original combinatorial optimization problem based on a solution of the approximation problem, and may find the solution of the original combinatorial optimization problem using the initial solution. The finding of the solution of the original combinatorial optimization problem may be executed using SA or the like. The finding of the solution of the original combinatorial optimization problem may be executed by the search unit 13 or may be executed by another processing unit such as the processing unit 12. In this case, the processing unit 12 outputs a solution finally obtained for the original combinatorial optimization problem.

According to the data processing device 10, information indicating a problem of arranging a plurality of items in a predetermined region is acquired. For each of the plurality of items, a plurality of states according to a position where the item is arranged in the region is generated based on the information. A plurality of pairs of two items included in the plurality of items is specified. An evaluation function indicating an evaluation value according to a combination of states of the two items in the plurality of specified pairs is calculated. An Ising-type objective function including a cost term indicating a sum of evaluation values for each of the plurality of pairs of items indicated by the evaluation function is generated for combinations of the states of the plurality of items. A solution corresponding to the problem is acquired using the search unit 13 that searches for a solution based on the objective function.

Therefore, the data processing device 10 may improve efficiency of finding a solution. Specifically, by calculating an evaluation function focusing on two items, the data processing device 10 may formulate a problem using the evaluation function. Therefore, the data processing device 10 does not need to directly express shapes of items and positions where the items may be arranged in the problem by QUBO, and may easily formulate the problem. As a result, the data processing device 10 may expand an available range of the search unit 13 (QUBO solver) that executes QA or SA. Furthermore, the data processing device 10 may reduce a processing cost of formulating the problem as compared with a case where the shapes of the items and the positions where the items may be arranged in the problem are directly expressed by the QUBO.

Moreover, the data processing device 10 may acquire an initial solution of an original combinatorial optimization problem by formulating, by the method described above, an approximation problem obtained by simplifying the original combinatorial optimization problem as described above and solving the approximation problem by the search unit 13. Therefore, the data processing device 10 may obtain an initial solution at high speed by QA or SA executed by the search unit 13 even in a case where the number of state variables that may be handled by the search unit 13 is limited and it is difficult to directly solve the original combinatorial optimization problem. The initial solution is already approaching a good solution. Therefore, as compared with a case where the method described above is not applied, the data processing device 10 may shorten a processing time of solution search by SA for the original combinatorial optimization problem.

[Second Embodiment]

Next, a second embodiment will be described.

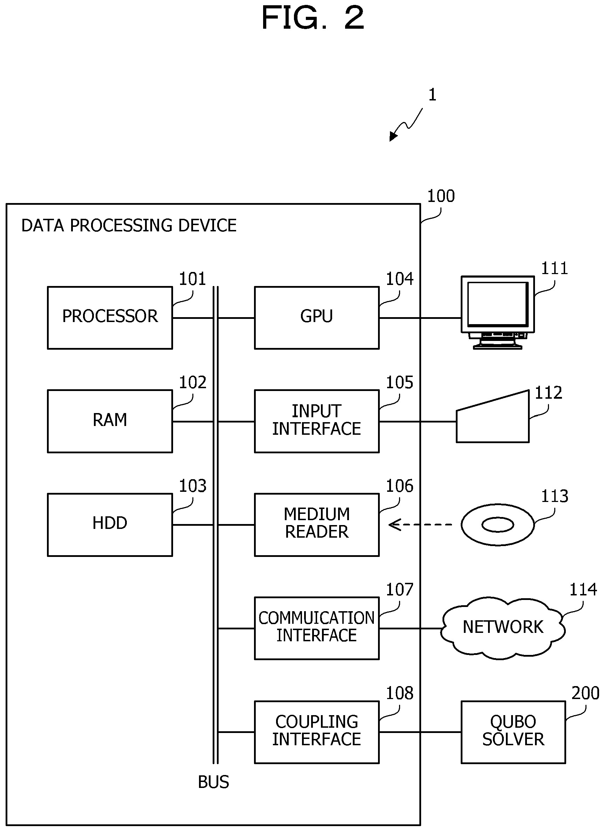

FIG. 2 is a diagram illustrating an example of hardware of a data processing system of a second embodiment.

A data processing system 1 is used to find a solution of a combinatorial optimization problem. Here, a packing problem is exemplified as the combinatorial optimization problem. Examples of the packing problem include a problem of efficiently packing a plurality of objects in a box without gaps, and the like. The data processing system 1 includes a data processing device 100 and a QUBO solver 200.

The data processing device 100 includes a processor 101, a RAM 102, an HDD 103, a GPU 104, an input interface 105, a medium reader 106, a communication interface 107, and a coupling interface 108. These units included in the data processing device 100 are coupled to a bus inside the data processing device 100. The processor 101 corresponds to the processing unit 12 of the first embodiment. The RAM 102 or the HDD 103 corresponds to the storage unit 11 of the first embodiment.

The processor 101 is an arithmetic device that executes a program command. The processor 101 is, for example, a CPU. The processor 101 loads at least a part of a program and data stored in the HDD 103 into the RAM 102, and executes the program. Note that the processor 101 may include a plurality of processor cores. Furthermore, the data processing device 100 may include a plurality of processors. Processing to be described below may be executed in parallel by using the plurality of processors or processor cores. Furthermore, a set of the plurality of processors may be referred to as a "multiprocessor" or simply "processors".

The RAM 102 is a semiconductor memory that temporarily stores a program to be executed by the processor 101 and data to be used by the processor 101 for arithmetic operations. Note that the data processing device 100 may include a memory of a type other than the RAM, or may include a plurality of memories.

The HDD 103 is a nonvolatile storage device that stores software programs such as an operating system (OS), middleware, and application software, and data. Note that the data processing device 100 may include another type of storage device such as a flash memory or a solid state drive (SSD), or may include a plurality of nonvolatile storage devices.

The GPU 104 outputs an image to a display 111 coupled to the data processing device 100 according to a command from the processor 101. As the display 111, an optional type of display such as a cathode ray tube (CRT) display, a liquid crystal display (LCD), a plasma display, or an organic electro-luminescence (OEL) display may be used.

The input interface 105 acquires input signals from an input device 112 coupled to the data processing device 100, and outputs the input signals to the processor 101. As the input device 112, a pointing device such as a mouse, a touch panel, a touch pad, or a trackball, a keyboard, a remote controller, a button switch, or the like may be used. Furthermore, a plurality of types of input devices may be coupled to the data processing device 100.

The medium reader 106 is a reading device that reads a program and data recorded in a recording medium 113. As the recording medium 113, for example, a magnetic disk, an optical disk, a magneto-optical (MO) disk, a semiconductor memory, or the like may be used. The magnetic disk includes a flexible disk (FD) and an HDD. The optical disk includes a compact disc (CD) and a digital versatile disc (DVD).

The medium reader 106 copies, for example, a program and data read from the recording medium 113 to another recording medium such as the RAM 102 or the HDD 103. The read program is executed by, for example, the processor 101. Note that the recording medium 113 may be a portable recording medium, and may be used for distribution of the program and the data. Furthermore, the recording medium 113 and the HDD 103 may be referred to as computer-readable recording media.

The communication interface 107 is coupled to a network 114, and communicates with another information processing device via the network 114. The communication interface 107 may be a wired communication interface coupled to a wired communication device such as a switch or a router or may be a wireless communication interface coupled to a wireless communication device such as a base station or an access point.

The coupling interface 108 is an interface coupled to the QUBO solver 200. The coupling interface 108 communicates with the QUBO solver 200 according to a command from the processor 101.

The QUBO solver 200 is, for example, an Ising machine that executes QA or SA based on an Ising-type objective function. The QUBO solver 200 outputs a solution searched for by QA or SA to the data processing device 100. Note that the QUBO solver 200 may be included in the data processing device 100.

Here, as an example, a problem based on a two-dimensional packing problem will be considered. The two-dimensional packing problem is the same as, for example, a problem of determining an arrangement place of a circuit block in a semiconductor chip in semiconductor integrated circuit design, and is a combinatorial optimization problem that often appears in an industry. In the case of a semiconductor arrangement problem, the problem is to make longitudinal and lateral sizes of a rectangle including all of rectangular items as small as possible when the rectangular items are arranged without overlapping. Note that, in the packing problem used for the description below, shapes of items to be packed may not be rectangular. Furthermore, the items may be moved and rotated in a plane. Moreover, it is assumed that longitudinal and lateral sizes of a region in which the items may be arranged are specified in advance.

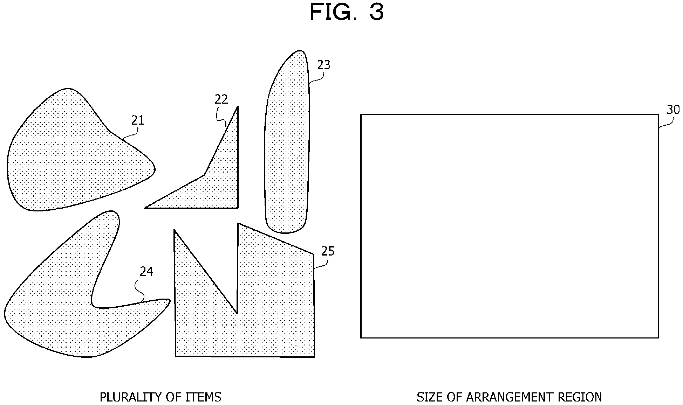

FIG. 3 is a diagram illustrating an example of input data of a combinatorial optimization problem.

The input data of the combinatorial optimization problem includes information regarding a plurality of items. The plurality of items indicates, for example, items 21, 22, 23, 24, and 25. The information regarding the plurality of items includes information indicating shapes of the respective items 21 to 25.

Furthermore, the input data of the combinatorial optimization problem includes information regarding a size of an arrangement destination region of the items, in other words, an arrangement region 30. In a case where the arrangement region 30 is a two-dimensional rectangle, for example, the size of the arrangement region 30 is represented by a length in a longitudinal direction of the arrangement region 30 and a length in a lateral direction of the arrangement region 30.

In this manner, a plurality of items and an arrangement region are given as input data regarding a problem desired to be solved. For example, the problem desired to be solved is a problem of accommodating all the items in the arrangement region under the following predetermined conditions. A first condition is that the shapes of the items are not allowed to be deformed. A second condition is that the items are not allowed to overlap each other. A third condition is that the items are allowed or not allowed to rotate.

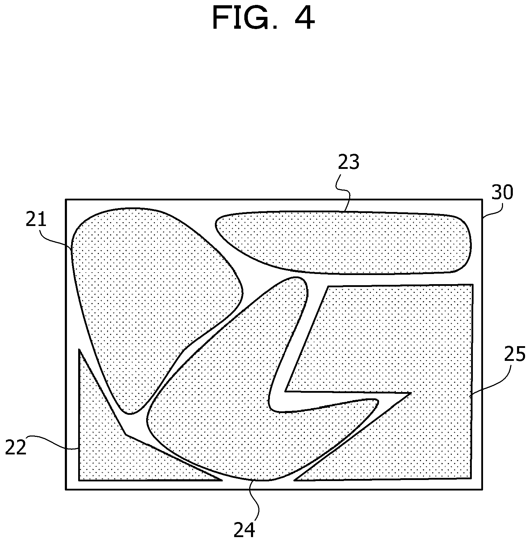

FIG. 4 is a diagram illustrating an example of a solution of the combinatorial optimization problem.

As illustrated in the example of FIG. 4, the items 21 to 25 may be arranged inside the arrangement region 30 without overlapping. In finding a solution of the combinatorial optimization problem, a solution representing the efficient arrangement of the items 21 to 25 is searched for in this manner.

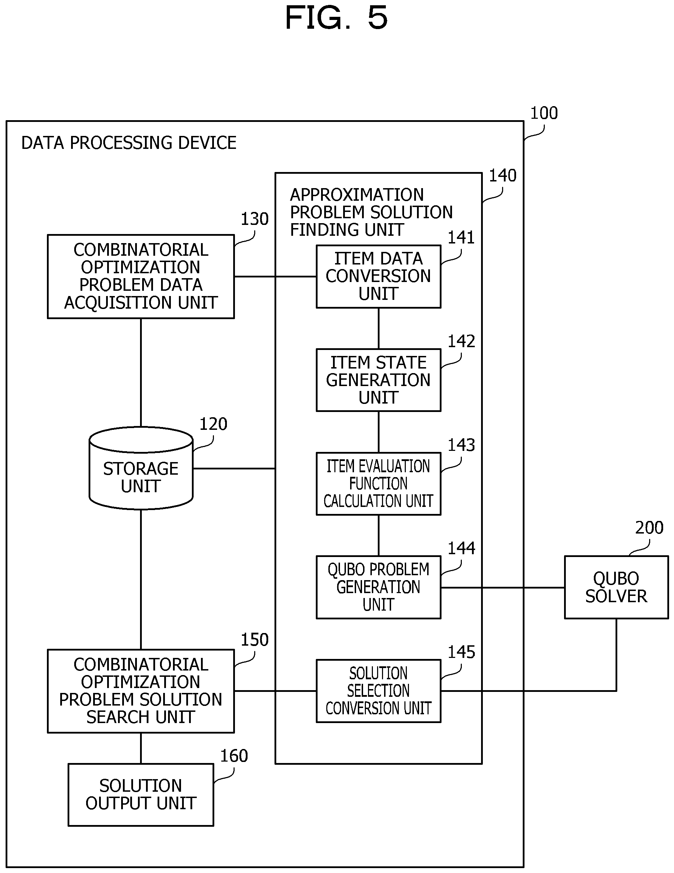

FIG. 5 is a diagram illustrating a functional example of the data processing device.

The data processing device 100 includes a storage unit 120, a combinatorial optimization problem data acquisition unit 130, an approximation problem solution finding unit 140, a combinatorial optimization problem solution search unit 150, and a solution output unit 160. A storage region of the RAM 102 or the HDD 103 is used as the storage unit 120. The combinatorial optimization problem data acquisition unit 130, the approximation problem solution finding unit 140, the combinatorial optimization problem solution search unit 150, and the solution output unit 160 are implemented by the processor 101 executing a program stored in the RAM 102.

The storage unit 120 stores input data of a combinatorial optimization problem desired to be solved by a user and data of an approximation problem generated based on the input data. The combinatorial optimization problem desired to be solved by the user is an original problem of the approximation problem, and may be said to be an original combinatorial optimization problem. The approximation problem is a problem obtained by simplifying the original combinatorial optimization problem. The approximation problem is also the combinatorial optimization problem, but is conveniently referred to as the "approximation problem" in order to be distinguished from the original combinatorial optimization problem. Furthermore, the storage unit 120 stores a solution searched for the approximation problem and a solution searched for the combinatorial optimization problem.

The combinatorial optimization problem data acquisition unit 130 acquires the input data of the combinatorial optimization problem desired to be solved by the user, and stores the input data in the storage unit 120.

The approximation problem solution finding unit 140 generates data of an approximation problem from the input data stored in the storage unit 120, and finds a solution of the approximation problem using the QUBO solver 200. The approximation problem solution finding unit 140 generates an initial solution of the original combinatorial optimization problem based on the solution of the approximation problem, and outputs the initial solution to the combinatorial optimization problem solution search unit 150.

The approximation problem solution finding unit 140 includes an item data conversion unit 141, an item state generation unit 142, an item evaluation function calculation unit 143, a QUBO problem generation unit 144, and a solution selection conversion unit 145.

The item data conversion unit 141 converts, based on the input data of the combinatorial optimization problem, each of shapes of items and a shape of the arrangement region 30 indicated by the input data into a bitmap.

The item state generation unit 142 generates information indicating states of the respective items based on the information regarding the respective items and the arrangement destination region of the items after conversion into the bitmaps. Note that the number of states that may be taken by each item is limited to a finite number.

The item evaluation function calculation unit 143 calculates, for each pair of items, evaluation functions E1 and E2 for each combination of states of the two items in the pair. The evaluation function E1 is a function that outputs, as an evaluation value, the number of pixels where the two items overlap each other with respect to the states of the two items. The evaluation function E2 is a function that outputs, as an evaluation value, the number of pixels of a closed region formed by the two items with respect to the states of the two items.

The QUBO problem generation unit 144 generates information regarding a QUBO problem based on the evaluation functions E1 and E2 calculated by the item evaluation function calculation unit 143. The QUBO problem corresponds to an approximation problem formulated by an Ising-type objective function E. In other words, the QUBO problem generation unit 144 calculates the objective function E of Expression (7) including the constraint term $C_{oh}$ of Expression (4), the cost term $C_{ow}$ of Expression (5), and the cost term $C_{ds}$ of Expression (6). The objective function E of Expression (7) is represented by the QUBO format of Expression (1).

The QUBO problem generation unit 144 inputs the generated information regarding the QUBO problem to the QUBO solver 200, and causes the QUBO solver 200 to execute search for a solution based on the objective function E. The QUBO solver 200 executes the search for a solution based on the objective function E by QA, SA, or the like, and responds with the searched solution.

The solution selection conversion unit 145 acquires solutions obtained by the QUBO solver 200, and performs processing of selecting a solution and processing of converting the selected solution into an initial solution of the original combinatorial optimization problem. Specifically, after obtaining a plurality of solutions from the QUBO solver 200, the solution selection conversion unit 145 evaluates each solution by a predetermined evaluation method, preferentially selects solutions from a highly rated solution, and uses the solutions for generating the initial solution of the original combinatorial optimization problem.

The combinatorial optimization problem solution search unit 150 searches for a solution of the original combinatorial optimization problem using the initial solution acquired from the approximation problem solution finding unit 140. The combinatorial optimization problem solution search unit 150 searches for a solution using, for example, optimization algorithm such as an SA method.

The solution output unit 160 outputs the solution searched for by the combinatorial optimization problem solution search unit 150. For example, the solution output unit 160 may cause the display 111 to display an image representing the solution, or may transmit information indicating the solution to another computer via the network 114.

In this manner, the data processing device 100 may approximate or simplify an original combinatorial optimization problem to make the problem easy to handle by the QUBO solver 200, and may use a feature of high-speed processing of the QUBO solver 200. Furthermore, in the solution search by the combinatorial optimization problem solution search unit 150, since the initial solution is already in the vicinity of a desired solution, it is possible to shorten a time for the solution search that results in relatively slow processing by the SA method or the like.

Next, a processing procedure of the data processing device 100 will be described.

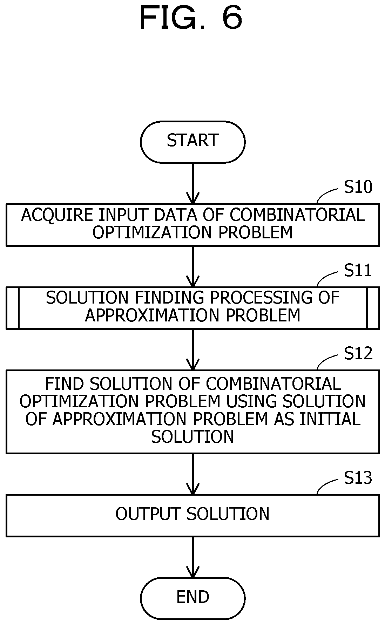

FIG. 6 is a flowchart illustrating an example of main processing.

(S10) The combinatorial optimization problem data acquisition unit 130 acquires input data of a combinatorial optimization problem desired to be solved by a user, and stores the input data in the storage unit 120.

(S11) The approximation problem solution finding unit 140 generates data of an approximation problem based on the input data acquired in step S10, and executes finding of a solution of the approximation problem. The approximation problem solution finding unit 140 stores a plurality of obtained solutions in the storage unit 120. The approximation problem solution finding unit 140 evaluates the plurality of solutions by a predetermined evaluation method, and narrows down the solutions to highly rated solutions. The approximation problem solution finding unit 140 converts the solution obtained by the narrowing down into an initial solution of the original combinatorial optimization problem. Note that details of the solution finding processing of the approximation problem will be described later.

(S12) The combinatorial optimization problem solution search unit 150 executes finding of a solution of the combinatorial optimization problem using the solution of the approximation problem obtained in step S11 as the initial solution. Specifically, the combinatorial optimization problem solution search unit 150 searches for a solution by acquiring the initial solution generated by the approximation problem solution finding unit 140 and executing the optimization algorithm such as the SA method with the initial solution as a starting point.

(S13) The solution output unit 160 outputs the solution obtained by the combinatorial optimization problem solution search unit 150. Then, the main processing ends.

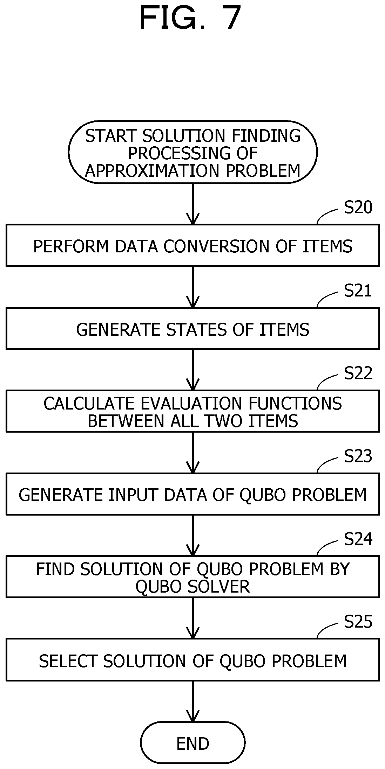

FIG. 7 is a flowchart illustrating an example of the solution finding processing of the approximation problem.

The solution finding processing of the approximation problem corresponds to step S11.

(S20) The item data conversion unit 141 converts, based on the input data of the combinatorial optimization problem, a shape of each of a plurality of items indicated by the input data into simplified data. In the present example, the item data conversion unit 141 converts the shape of each item and a shape of an arrangement region into bitmaps.

(S21) The item state generation unit 142 generates a state of each item based on each item and the arrangement region that have been bitmapped. The state of the item indicates a position where the item may be arranged in the arrangement region. For example, the arrangement position of the item is represented by XY coordinates in the arrangement region. Furthermore, in a case where rotation of the item is allowed, the state of the item includes information regarding a rotation angle of the item.

(S22) The item evaluation function calculation unit 143 calculates the evaluation functions E1 and E2 for each pair of items. The evaluation functions E1 and E2 are calculated for combinations of states of all pairs of items.

(S23) The QUBO problem generation unit 144 generates input data of a QUBO problem. The input data of the QUBO problem includes information regarding the Ising-type objective function E. The QUBO problem generation unit 144 calculates the objective function E of Expression (7) including the constraint term $C_{oh}$ and the cost terms $C_{ow}$ and $C_{ds}$ based on the evaluation functions E1 and E2 to obtain the objective function E of Expression (1) represented in the QUBO format.

(S24) The QUBO problem generation unit 144 inputs the input data of the QUBO problem to the QUBO solver 200, and causes the QUBO solver 200 to execute search for a solution based on the objective function E using QA, SA, or the like.

(S25) The solution selection conversion unit 145 acquires a plurality of solutions obtained by the search by the QUBO solver 200, evaluates each solution by a predetermined evaluation method, and preferentially selects a predetermined number of highly rated solutions. The solution selection conversion unit 145 converts the selected solution into an initial solution of the original combinatorial optimization problem, and outputs the initial solution to the combinatorial optimization problem solution search unit 150. Then, the solution finding processing of the approximation problem ends.

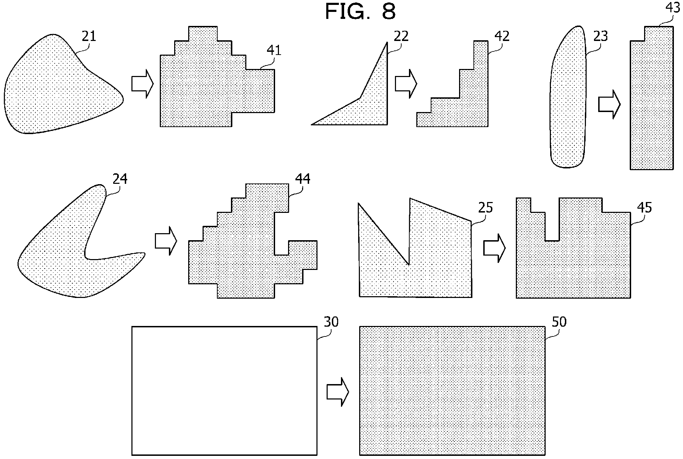

FIG. 8 is a diagram illustrating an example of data conversion for input data of a combinatorial optimization problem.

The item data conversion unit 141 converts, based on input data of an original combinatorial optimization problem, a shape of each item and a shape of an arrangement region into bitmaps. For example, items 41, 42, 43, 44, and 45 are obtained by bitmapping the items 21, 22, 23, 24, and 25 indicated by the input data of the original combinatorial optimization problem, respectively. Furthermore, an arrangement region 50 is obtained by bitmapping the arrangement region 30 indicated by the input data of the original combinatorial optimization problem.

Here, resolution at the time of bitmapping may be automatically adjusted so as to have a data size that may be processed by the data processing device 100, or may be specified in advance. Furthermore, as exemplified in FIG. 8, a planar figure may be expressed by a bitmap pixel. A three-dimensional figure may be expressed by a voxel.

Note that data conversion by the item data conversion unit 141 is processing for enabling an evaluation function used in a subsequent process to be implemented as processing that may be calculated by a computer, and is not necessarily limited to be bitmapping. For example, even when the shape of the item is defined by information regarding a mathematical straight line or curve, it is acceptable as long as an evaluation function can be implemented as computable software function or the like.

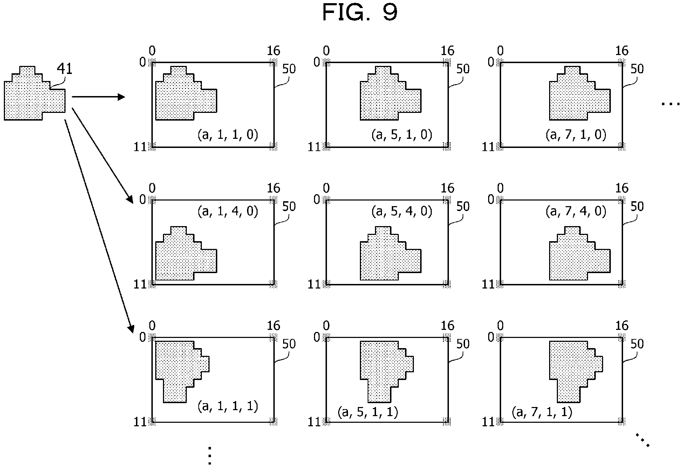

FIG. 9 is a diagram illustrating an example of state generation of an item.

The item state generation unit 142 generates, for each of the bitmapped items 41 to 45, a plurality of states that may be taken in a case where the corresponding item is arranged in the arrangement region 50. The plurality of states of the item indicates variations of the arrangement of the corresponding item in the arrangement region 50. It is assumed that a horizontal axis of the arrangement region 50 is an X axis, and a vertical axis is a Y axis. It is assumed that an upper left vertex of the arrangement region 50 is an origin of XY coordinates. The state of the item is expressed by XY coordinates and a rotation angle at which the item is arranged. The state generation of the item is to enumerate states that may be taken by the item with respect to the arrangement region.

The arrangement position of the item is expressed by XY coordinates of an upper left pixel of a bounding box of the item. The bounding box is the smallest rectangular region surrounding the entire item. For example, the state of the item is expressed by four items of (identification information, X coordinate, Y coordinate, and rotation of the item). It is assumed that, for example, one unit of the rotation is right rotation of 90 degrees clockwise. The rotation is represented by 0 being no rotation, 1 being right rotation of 90 degrees, ..., and the like.

The item state generation unit 142 generates states (a, 1, 1, 0), (a, 5, 1, 0), (a, 7, 1, 0), ..., (a, 7, 1, 1), ... for the item 41. For example, (a, 7, 1, 1) indicates that the item 41 indicated by identification information a is arranged at coordinates (X, Y) = (7, 1) with right rotation of 90 degrees.

The item state generation unit 142 automatically generates the state by specifying a range of each item value for representing the state in advance. For example, the item state generation unit 142 may generate the state of each item based on the following state generation rules (1) to (3).

The X coordinate is assumed to range from 0 to 10. The X coordinate interval is assumed to be 2.

(2) The Y coordinate is assumed to range from 0 to 8. The Y coordinate interval is assumed to be 1.

(3) The rotation is assumed to be any one of 0, 1, 2, and 3.

The number of state variables used in an approximation problem is the total number of states of all the items. As the arrangement region becomes wider, the number of coordinates at which the items may be arranged increases, and the number of states of the items increases. On the other hand, there is an upper limit for the number of state variables that may be handled by the QUBO solver 200.

Thus, the item state generation unit 142 sets the total number of states of all the items to be equal to or less than the maximum number of state variables available in the QUBO solver 200. For example, it is assumed that the upper limit of the number of state variables that may be handled by the QUBO solver 200 is 1000 and the number of items is 10. In this case, the item state generation unit 142 may limit the upper limit of the number of states per item to 100. The item state generation unit 142 may change the number of states for each item.

For example, the item state generation unit 142 may limit the number of states of each item by performing, at the time of state generation, uniform thinning or sampling based on a uniformly distributed random number, a normally distributed random number, or the like.

Note that, instead of automatically performing the state generation in this process, all states that may be taken by the items may be enumerated and given as the input data of the combinatorial optimization problem from the beginning.

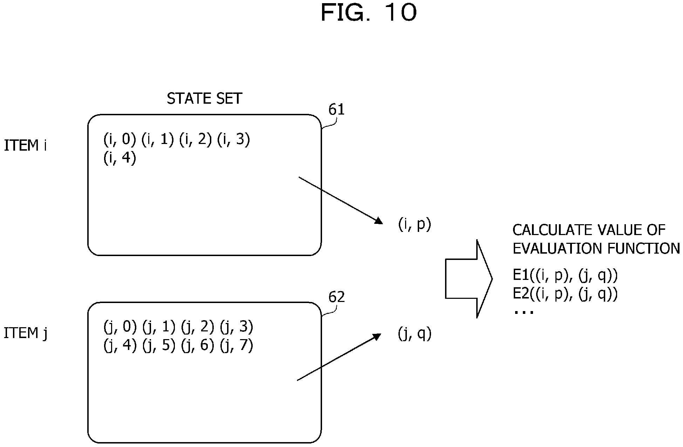

FIG. 10 is a diagram illustrating examples of evaluation functions calculated for two items.

The item state generation unit 142 generates a state set 61 for an item i identified by identification information i. The state set 61 is a set including five states (i, 0) to (i, 4) of the item i as elements. A number "p" on the right side in a state (i, p) is a number for identifying three items of (X coordinate, Y coordinate, and rotation) in the state of the item i.

Furthermore, the item state generation unit 142 generates a state set 62 for an item j identified by identification information j. The state set 62 is a set including eight states (j, 0) to (j, 7) of the item j as elements. A number "q" on the right side in a state (j, q) is a number corresponding to a set of values of three items of (X coordinate, Y coordinate, and rotation) in the state of the item j.

The item evaluation function calculation unit 143 calculates a value of the evaluation function E1((i, p), (j, q)), in other words, a first evaluation value for a pair of items (i, j). Furthermore, the item evaluation function calculation unit 143 calculates a value of the evaluation function E2((i, p), (j, q)), in other words, a second evaluation value for the pair of items (i, j).

Note that the approximation problem solution finding unit 140 may use only one of the evaluation functions E1 and E2 for generating an approximation problem. The approximation problem solution finding unit 140 may use three or more evaluation functions for generating an approximation problem.

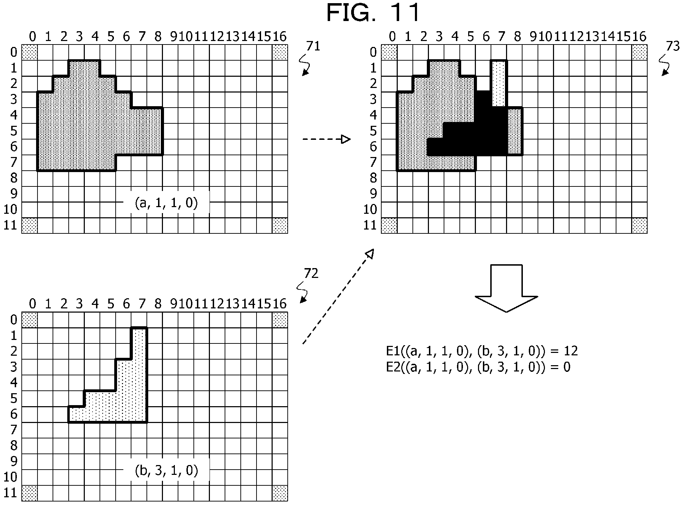

FIG. 11 is a diagram illustrating a first calculation example of the evaluation functions calculated for two items.

A state image 71 indicates the state (a, 1, 1, 0) of the item 41 (= item a). A state image 72 indicates a state (b, 3, 1, 0) of the item 42 (= item b). A state image 73 illustrates a case where the state (a, 1, 1, 0) and the state (b, 3, 1, 0) occur at the same time.

In this case, the number of pixels (the number of black pixels) where the items overlap each other in the state image 73 is 12. Therefore, the evaluation function E1((a, 1, 1, 0), (b, 3, 1, 0)) = 12 is satisfied. Furthermore, there is no closed region in the state image 73. Therefore, the evaluation function E2((a, 1, 1, 0), (b, 3, 1, 0)) = 0 is satisfied.

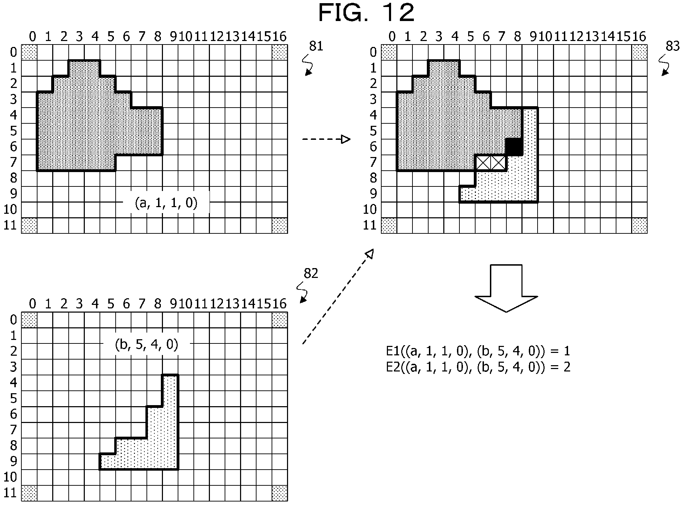

FIG. 12 is a diagram illustrating a second calculation example of the evaluation functions calculated for the two items.

A state image 81 indicates the state (a, 1, 1, 0) of the item 41 (= item a). A state image 82 indicates a state (b, 5, 4, 0) of the item 42 (= item b). A state image 83 illustrates a case where the state (a, 1, 1, 0) and the state (b, 5, 4, 0) occur at the same time. Regions of two pixels indicated by coordinates (6, 7) and (7, 7) (pixels added with X marks) of the state image 83 are closed regions generated by being surrounded by the items.

In this case, the number of pixels (the number of black pixels) where the items overlap each other in the state image 83 is 1. Therefore, the evaluation function E1((a, 1, 1, 0), (b, 5, 4, 0)) = 1 is satisfied. Furthermore, the number of pixels with the X mark is two. Therefore, the evaluation function E2((a, 1, 1, 0), (b, 5, 4, 0)) = 2 is satisfied.

In this manner, the evaluation function E1 is a function that counts and returns the number of pixels where two items overlap each other. In a packing problem, since overlap is not allowed to exist when items are arranged, a function that gives an evaluation metrics of the overlap is E1.

Furthermore, the evaluation function E2 is a function that counts and returns the number of pixels of a closed region surrounded by two items. In a case where there is a plurality of closed regions, it is assumed that the evaluation function E2 is a total value of the number of pixels of all the closed regions. It is considered that it tends to be difficult to arrange still another item within a narrow closed region. Therefore, E2 gives an evaluation metrics for avoiding such a situation. Note that even in a case where the closed region is wide enough, it is considered that another item may be arranged, and a threshold may be set for calculation of E2. For example, in a case where the number of pixels in one closed region is 50 or more, it may be regarded that E2 = 0 is satisfied.

The evaluation functions E1 and E2 may be easily executed using a method of graphics processing algorithms represented as a bitmap. For example, in the case of E1, it is sufficient that the item evaluation function calculation unit 143 performs an AND operation of two bitmap images and counts pixels having the value 1.

In the examples of FIGs. 11 and 12, an example of the processing with the bitmap image ([0, 1]) is illustrated, but expansion to a gradation image ([0, 255]) may also be possible. For example, the evaluation function E1 may calculate a degree of overlapping of pixels as an average value or a maximum value of pixel values.

Moreover, the expression method of the state of the item is not limited to the graphical representation, and may be constant data (may be made multidimensional with a vector and a matrix) in an array format. In that case, the item evaluation function calculation unit 143 calculates values of evaluation functions for a combination of states of two items by the evaluation functions defined as arithmetic operations regarding the constant data in the array format.

For example, in the case of a scheduling problem of determining a working time of a plurality of employees, an item is regarded as an employee, and a desired working time pattern may be expressed by a vector for each employee. Similarly, in a case where scheduling when a plurality of devices is operated is optimized in a manufacturing factory, all patterns of an executable operation time may be expressed by a vector for each pattern for each device. For these various types of combinatorial optimization problems, the evaluation functions described above are defined according to features of the problem, so that the item evaluation function calculation unit 143 may calculate values of the evaluation functions for a combination of states of two items.

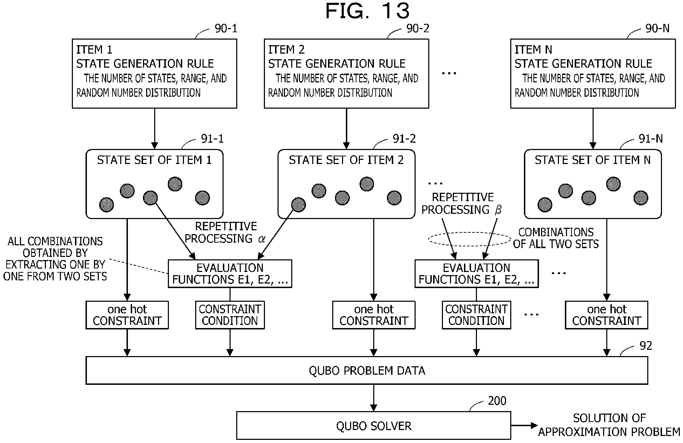

FIG. 13 is a diagram illustrating a flow of finding a solution using the QUBO solver.

For example, state generation rules 90-1, 90-2, ..., 90-N corresponding to N items "1", "2", ..., "N" are stored in the storage unit 120 in advance. The state generation rules 90-1, 90-2, ..., 90-N are generation rules of states of the items "1", "2", ..., "N", respectively. Each state generation rule includes, for example, information indicating the number of states to be generated, a range of the X coordinate and the Y coordinate of arrangement, and a random number distribution used for state sampling.

The item state generation unit 142 generates a state set 91-1 of the item "1" based on the state generation rule 90-1. The item state generation unit 142 generates a state set 91-2 of the item "2" based on the state generation rule 90-2. Thereafter, similarly, the item state generation unit 142 generates a state set 91-N of the item "N" based on the state generation rule 90-N.

The item evaluation function calculation unit 143 calculates, for all combinations obtained by extracting states one by one from state sets of two items, each of the evaluation functions E1, E2, ... regarding the two items. In other words, repetitive processing $\alpha$ of calculating a value of each of the evaluation functions E1, E2, ... is performed on the combinations obtained by extracting the states one by one from the state sets of the two items.

In the example of FIG. 10 described above, the number of states of the item i is five. The number of states of the item j is eight. Therefore, the item evaluation function calculation unit 143 calculates each evaluation function for $5 \times 8 = 40$ patterns of input, in other words, combinations of the states of two items. In this case, the number of times of repetition in the repetitive processing $\alpha$ for the pair of items i and j is 40.

Furthermore, the item evaluation function calculation unit 143 performs the repetitive processing $\alpha$ for each combination obtained by selecting two items among all the items. In other words, the item evaluation function calculation unit 143 performs repetitive processing $\beta$ of repetitively performing processing that includes: extracting two state sets from among the state sets of all the items and performing processing $\alpha$ on the extracted two state sets.

For example, in a case where the number of items is N, the number of times of repetition in the repetitive processing $\beta$ is $N \times (N - 1)/2$ since it is the number in a case where two items are extracted from among the N items.

The QUBO problem generation unit 144 generates QUBO problem data 92 based on the evaluation functions E1 and E2 focusing on the pair of two items. The QUBO problem generation unit 144 performs QUBO formulation on the two-dimensional packing problem described above as an example as follows.

The QUBO problem generation unit 144 allocates a state variable $x_{i,s}$ to the item i and a state set S(i) and a state s ($s \in S(i)$) of the item i. The state variable $x_{i,s} = 1$ indicates that the state of the item i is s. The state variable $x_{i,s} = 0$ indicates that the state of the item i is not s.

The QUBO problem generation unit 144 imposes the following constraint conditions in the QUBO formulation.

A first constraint condition is that "one item state is determined". The item i always takes any one state. Therefore, for a set of state variables regarding the item i $\{x_{i,s}|s \in S(i)\}$, only one of the state variables included in the set needs to take the value "1", and all the other state variables need to take the value "0". This first constraint condition is also referred to as one hot constraint. The "one hot" means that there is only one value "1" among n bits, and the rest are all "0".

In the QUBO formulation, the one hot constraint regarding one item is expressed by Expression (3). The right side of Expression (3) is a quadratic polynomial that squares the whole by subtracting 1 from a sum of values of all the state variables included in the state set S(i) of the item i. When $C_{oh,i}(X) = 0$ in Expression (3) is satisfied, the one hot constraint is satisfied for the item i. When $C_{oh,i}(X) \neq 0$ is satisfied, the one hot constraint is not satisfied for the item i. Note that, since this expression performs squaring, it always takes a non-negative value of 0 or more. Thus, in a case where the one hot constraint is not satisfied, the value moves away from a minimum value, representing an undesirable situation for the optimization problem.

The one hot constraint is imposed on all the items. Therefore, the one hot constraint for all the items is represented by a quadratic polynomial on the right side of Expression (4) obtained by summing Expression (3) over all the items.

A second constraint condition is that "the items are not allowed to overlap each other". For example, the meaning that the pixels (black pixels) overlapping by the two items illustrated in FIGs. 11 and 12 are not allowed to exist or that it is desired to reduce the number of overlapping pixels as much as possible while allowing for an error due to bitmapping is expressed by a quadratic expression on the right side of Expression (5). The smaller the value of $C_{ow}(X)$ in Expression (5), the smaller a degree of overlap of the two items.

In other words, the evaluation function representing the overlap of the items is E1. In a case where the item i takes a state si and the item j takes a state sj, the number of overlapping pixels is represented as $E1(si, sj) \cdot x_{i,si} \cdot x_{j,sj}$. $E1(si, sj)$ is a constant value. $E1(si, sj)$ is a value obtained by substituting a numerical value into the evaluation function E1. The cost term $C_{ow}(X)$ corresponding to the second constraint condition is obtained by adding $E1(si, sj) \cdot x_{i,si} \cdot x_{j,sj}$ for all pairs of the items and all states of the items.

A third constraint condition is that "it is better to make a closed region created by the items narrow". For example, the meaning that it is desirable to have fewer pixels with the X mark illustrated in FIG. 12 is expressed by a quadratic expression on the right side of Expression (6). The smaller the value of $C_{ds}(X)$ in Expression (6), the narrower the closed region. The form of Expression (6) is the same as that of Expression (5). The expression (6) is obtained by replacing the evaluation function E1 of Expression (5) with E2.

In a case where there is another evaluation function, the QUBO problem generation unit 144 may similarly create a quadratic expression of the QUBO.

The QUBO problem generation unit 144 creates one quadratic polynomial indicated by Expression (7) by linear combination of Expressions (4), (5), and (6) multiplied by the weighting coefficients $W_1$, $W_2$, and $W_3$, respectively. The weighting coefficients $W_1$, $W_2$, and $W_3$ are constant values. The weighting coefficients $W_1$, $W_2$, and $W_3$ are multiplied by Expressions (4), (5), and (6) for the purpose of representing how much each constraint condition needs to be considered. Expression (7) is in the QUBO format of Expression (1), and is input data of a QUBO problem. The QUBO problem data 92 indicates the input data of the QUBO problem.

The QUBO solver 200 searches for a solution that takes a minimum value of a quadratic polynomial of the QUBO indicated by the QUBO problem data 92. Output of the QUBO solver 200, in other words, a solution of an approximation problem, is a value of each state variable ($x_{i,si}$, or the like) which is an element of a state vector X = [ ..., $x_{i,si}$, ...].

The QUBO solver 200 is fast in processing and may output a plurality of solutions in a short time. Note that the QUBO solver 200 may also output a solution that violates a constraint.

Thus, the solution selection conversion unit 145 selects a solution by substituting a value of X, which is a solution, into each expression of the constraint condition. For example, in the case of a two-dimensional packing problem, the following method is used.

The solution selection conversion unit 145 discards a solution that does not satisfy the first constraint condition, in other words, the one hot constraint. Specifically, in a case where the solution selection conversion unit 145 substitutes the value of the solution X into Expression (4), and 0 is not obtained, the solution selection conversion unit 145 discards the corresponding solution X.

(2) The solution selection conversion unit 145 gives priority to a solution satisfying the second constraint condition. In other words, the solution selection conversion unit 145 sorts the respective solutions in ascending order of the value of $C_{ow}$ obtained by substituting the value of the solution X into Expression (5).

(3) The solution selection conversion unit 145 may use a plurality of sort keys. For example, the solution selection conversion unit 145 may use a first sort key as the value of $C_{ow}$ obtained by substituting the value of the solution X into Expression (5), and use a second sort key as the value of $C_{ds}$ obtained by substituting the value of the solution X into Expression (6). For example, a solution having a small value of $C_{ow}$ is given priority, and in a case where there are two or more solutions having the same value of $C_{ow}$, a solution having a small value of $C_{ds}$ among them is given priority.

Note that, at this stage, there is a case where a solution that may be implemented may not be obtained from the QUBO solver 200. In that case, the QUBO problem generation unit 144 may adjust the weighting coefficients $W_1$, $W_2$, and $W_3$ to re-create the QUBO problem data 92 and re-execute finding of a solution by the QUBO solver 200. For example, in a case where the one hot constraint is not satisfied, the QUBO problem generation unit 144 increases the value of $W_1$.

The combinatorial optimization problem solution search unit 150 solves the original combinatorial optimization problem using the solution of the approximation problem thus obtained as the initial solution. The solution obtained from the QUBO solver 200 is a list (vector) of values of X, in other words, values 0 and 1. The state variable $x_{i,s} = 1$ means that the state of the item i is s, and the state s corresponds to the information regarding an arrangement situation (X coordinate, Y coordinate, rotation, and the like) of the item i. Therefore, since the solution selection conversion unit 145 may obtain information regarding arrangement situations of all the items by extracting the state variable having the value of 1 and mapping a value of a subscript portion (i, s) of the state variable to the original combinatorial optimization problem, the information may be used as the initial solution.

The combinatorial optimization problem solution search unit 150 may find a solution of the original combinatorial optimization problem by searching for the solution using, for example, the SA method using the initial solution as a starting point. The initial solution at this time is already approaching a good solution. Therefore, the processing time of the solution search in the SA method is shortened as compared with a case where the present method is not applied.

The QUBO solver 200 may output a plurality of solutions in a short time. The solution selection conversion unit 145 may obtain a set of initial solutions rich in variety from the plurality of solutions. Therefore, even in a case where it is difficult to escape from a local solution and to reach another solution in the SA method, there is an advantage that it is easy to solve.

Next, a more specific example of finding a solution by the data processing device 100 will be described.

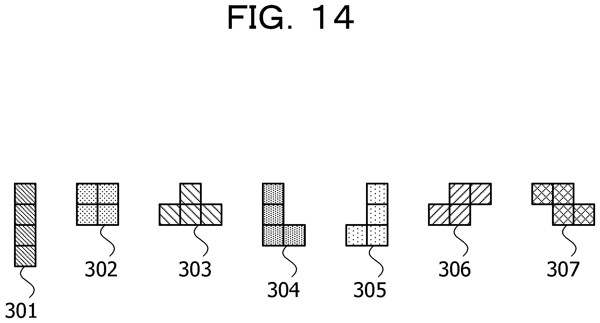

FIG. 14 is a diagram illustrating examples of tetrominoes.

A figure created by coupling four squares is referred to as a tetromino. When tetrominoes rotated in units of 90 degrees are regarded as the same, there are seven types of tetrominoes, that is, tetrominoes 301, 302, 303, 304, 305, 306, and 307.

In the following description, a two-dimensional packing problem in a case where shapes of items are represented by tetrominoes will be exemplified. Problem setting is as follows.

First, the shapes of the items are the tetrominoes, which include a tetromino rotated in units of 90 degrees. Second, a region in which the items are arranged is a rectangular region represented by a width and a height. Third, a goal of the problem is to arrange elements of the given item set, in other words, all of the items, in the rectangular region so that they do not overlap each other. Note that, here, for simplicity of description, it is assumed that rotation of the item is not allowed when the item is arranged.

This combinatorial optimization problem may be handled similarly to an approximation problem, since it may be regarded that the tetrominoes are already bitmapped. Therefore, in the following, description will be made regarding the original combinatorial optimization problem as the approximation problem as it is.

Next, specific input data of the combinatorial optimization problem will be described.

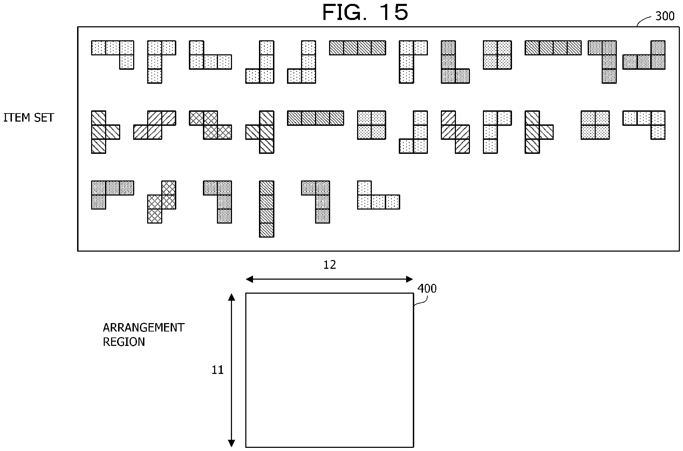

FIG. 15 is a diagram illustrating an example of the input data (part 1).

The input data includes information regarding an item set 300 and information regarding an arrangement region 400. The number of elements of the item set 300, in other words, the number of items to be arranged is 30. A size of the arrangement region 400 is a width = 12 and a height = 11.

It is assumed that an identification number of an item is denoted by i. Each item in the item set 300 of the input data is listed, and i = 0, 1, 2, ... is assigned in order from a head of the list. Furthermore, arrangement coordinates of the item in the arrangement region 400 are represented by (x, y). An x coordinate is a coordinate in a width direction. A y coordinate is a coordinate in a height direction. The origin is an upper left vertex of the arrangement region 400.

A state variable $x_{i,x,y} = 1$ means a state where the item i is arranged at the coordinates (x, y). The state variable $x_{i,x,y} = 0$ means a state where the item i is not arranged at the coordinates (x, y). Here, a state variable name is set to x for convenience, but is not related to the coordinate value x.

The item state generation unit 142 enumerates all the coordinates (x, y) at which the item i may be arranged so as not to protrude from the arrangement region 400. In this case, the number of states of the item i is (area_width - item_width + 1)*(area_height - item_height + 1). The width of the arrangement region 400 is denoted by area_width. A width of the item is denoted by item_width. The height of the arrangement region 400 is denoted by area_height. A height of the item is denoted by item_height.

For example, in a square tetromino, the number of longitudinal and lateral pixels is two. Therefore, for an item represented by the square tetromino, (12 - 2 + 1)*(11 - 2 + 1) = 110 state variables will be used. In a case where the number of state variables is too large, the item state generation unit 142 may adjust the number of state variables by performing random thinning or the like instead of enumerating all the coordinates.

The item evaluation function calculation unit 143 uses the evaluation functions E1 and E2 described above. Note that it is assumed that the evaluation function E2 outputs 1 only when a closed region is one pixel, and outputs 0 in a case where the closed region is two or more pixels. The QUBO problem generation unit 144 generates QUBO problem data by Expression (7). It is assumed that the weighting coefficients $W_1$, $W_2$, and $W_3$ are $W_1 = 20$, $W_2 = 10$, and $W_3 = 1$, respectively.

For the QUBO problem data generated based on the input data of FIG. 15, the QUBO solver 200 obtains, for example, the following solution.

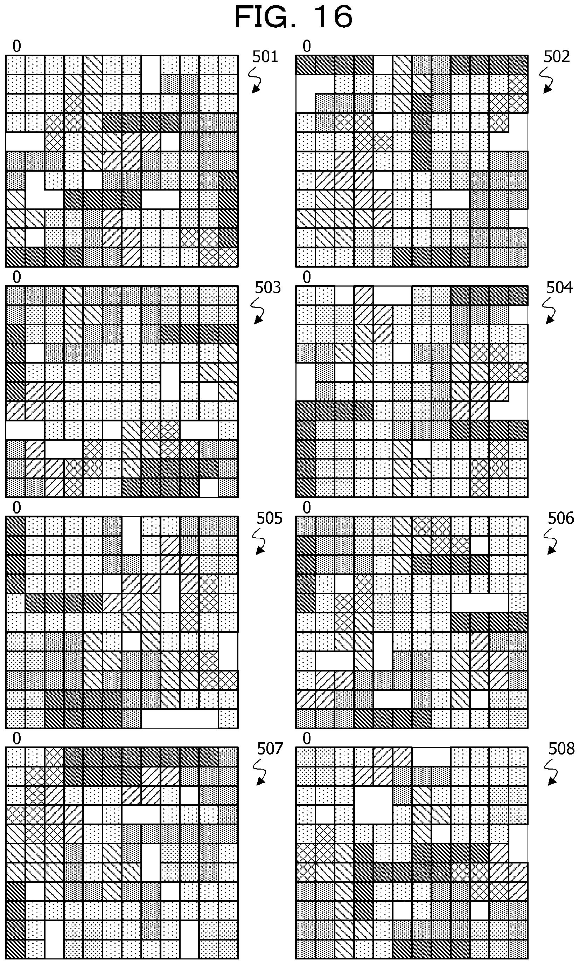

FIG. 16 is a diagram illustrating an example of the solution obtained from the QUBO solver (part 1).

The solution output by the QUBO solver 200 is a value of each state variable of the state vector X and is a list of 0 and 1. The state variable $x_{i,x,y} = 1$ means that the item i is arranged at the coordinates (x, y). Therefore, it is possible to illustrate a situation where subscripts i, x, and y are extracted for an element having a value of 1 in the state vector X and the item is arranged. Arrangement diagrams 501, 502, 503, 504, 505, 506, 507, and 508 are obtained by visualizing eight solutions obtained from the QUBO solver 200. The arrangement diagrams 501 to 508 are examples in which 30 items included in the item set 300 are arranged in the arrangement region 400. Numerical values described at the upper left of the respective arrangement diagrams 501 to 508 are values obtained by substituting the value of the solution X into Expression (7). When the value of Expression (7) is 0, the corresponding solution satisfies all the constraint conditions.

For example, the QUBO solver 200 may output tens to hundreds of solutions in a processing time of less than one second. Therefore, the approximation problem solution finding unit 140 may repeatedly perform finding of a solution. For example, in a case where there is a constraint condition violation, the QUBO problem generation unit 144 changes the value of at least any one of the weighting coefficients $W_1$, $W_2$, and $W_3$, and causes the QUBO solver 200 to re-execute finding of a solution. In a case where it is difficult to arrange all the items in the current arrangement region, the item data conversion unit 141 may re-create the problem by increasing the width and the height of the arrangement region.

Furthermore, in a case where there is a sufficient margin in the arrangement region after packing, the approximation problem solution finding unit 140 may create still another packing problem by increasing the number of item sets, decreasing the width of the arrangement region, decreasing the height of the arrangement region, or the like, and solve the another packing problem by the QUBO solver 200.

Note that, in the case of the problem exemplified in FIG. 15, the number of items is 30, and an area of the item is 4. Therefore, an area occupied by the items is 120. Furthermore, an area of the arrangement region 400 is $12 \times 11 = 132$. Therefore, a margin of the arrangement region 400 is 132 - 120 = 12.

Next, a case where the number of items is reduced and the size of the arrangement region is reduced will be exemplified.

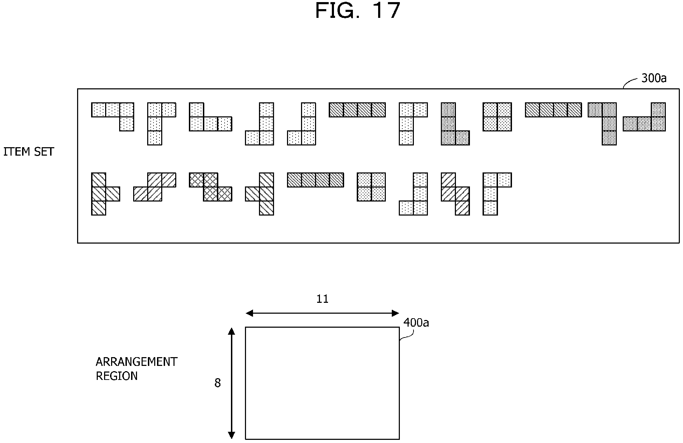

FIG. 17 is a diagram illustrating an example of the input data (part 2).

The input data includes information regarding an item set 300a and information regarding an arrangement region 400a. The number of elements of the item set 300a, in other words, the number of items to be arranged is 21. A size of the arrangement region 400a is a width = 11 and a height = 8. In this case, an arrangement margin is $11 \times 8 - 21 \times 4 = 4$.

For QUBO problem data generated based on the input data of FIG. 17, the QUBO solver 200 obtains, for example, the following solution.

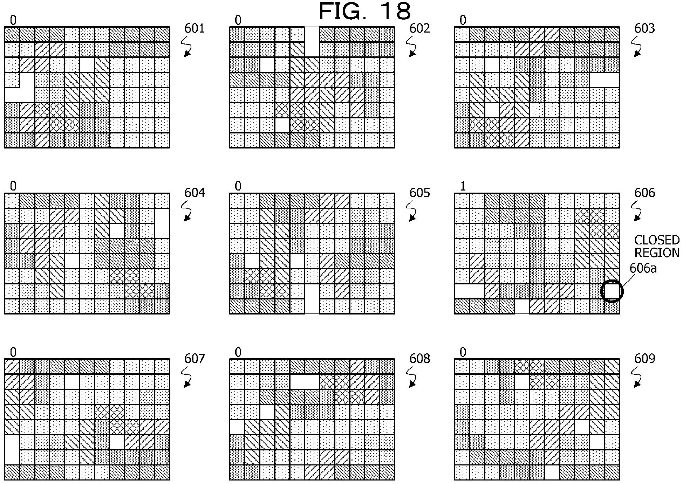

FIG. 18 is a diagram illustrating an example of the solution obtained from the QUBO solver (part 2).

Arrangement diagrams 601, 602, 603, 604, 605, 606, 607, 608, and 609 are obtained by visualizing nine solutions obtained from the QUBO solver 200. The arrangement diagrams 601 to 609 are examples in which 21 items included in the item set 300a are arranged in the arrangement region 400a.

Here, the evaluation function E2 focuses on two items. Therefore, a closed region of one pixel created by three or more items is not counted in the objective function of Expression (7). A closed region of one pixel created by two items is counted. For example, since a closed region 606a of one pixel is counted in the solution corresponding to the arrangement diagram 606 among the nine solutions corresponding to the arrangement diagrams 601 to 609, the value of Expression (7) becomes 1.

As described above, the calculation method of the combinatorial optimization problem by the data processing device 10 may be applied not only to a packing problem but also to other problems such as a scheduling problem.

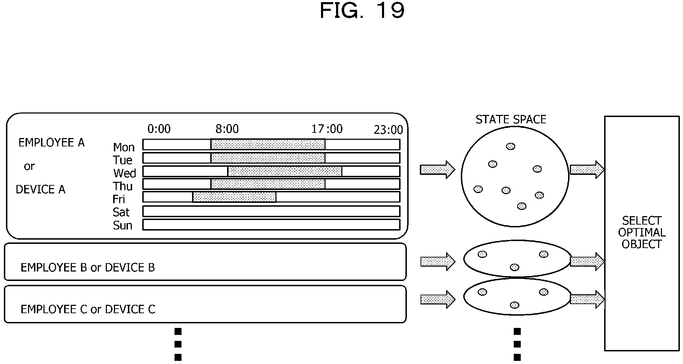

FIG. 19 is a diagram illustrating an application example to a scheduling problem.

In the scheduling problem, a resource to be scheduled, such as a staff or a device, is an example of the item. Furthermore, a time frame (time domain) to which the resource is allocated is an example of the region in which the item is arranged. For example, as an example of the scheduling problem, an allocation plan of working times of employees, a plan of an operation pattern of a device in a manufacturing factory, and the like may be considered. An arrangement pattern of each resource is represented by a vector in a state space, in other words, a state vector.

Also in the scheduling problem, the data processing device 100 may calculate, for each pair of items, evaluation functions according to a combination of states of the two items in the pair. Then, the data processing device 100 creates, for combinations of states of all items, an objective function including a sum of evaluation values for each pair of items indicated by the evaluation functions as a cost term, and may find a solution by the QUBO solver 200 based on the objective function.

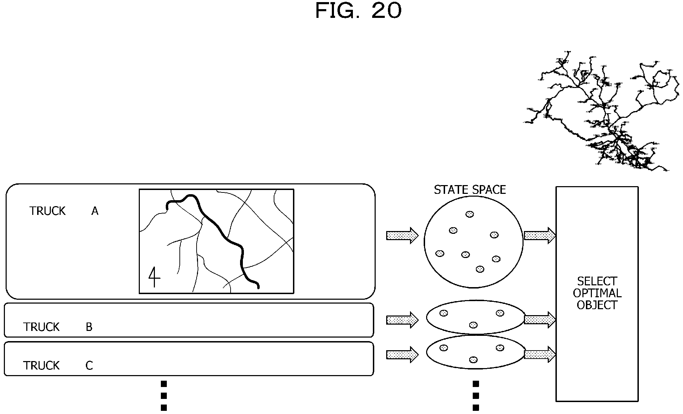

FIG. 20 is a diagram illustrating an application example to a vehicle routing problem.

Examples of the vehicle routing problem include a problem of optimizing a travel route of a delivery truck. In this case, the truck is an example of the item. Furthermore, a set of delivery routes to which trucks are allocated is an example of the region in which the items are arranged. An allocation pattern of each truck for the delivery route is represented by a vector in a state space, in other words, a state vector.

Also in the vehicle routing problem, the data processing device 100 may calculate, for each pair of items, evaluation functions according to a combination of states of the two items in the pair. Then, the data processing device 100 creates, for combinations of states of all items, an objective function including a sum of evaluation values for each pair of items indicated by the evaluation functions as a cost term, and may find a solution by the QUBO solver 200 based on the objective function.

As described above, the data processing device 100 may improve efficiency of finding a solution of a combinatorial optimization problem. For example, even a complicated combinatorial optimization problem that apparently seems difficult to be formulated in the QUBO format may be expressed in the QUBO format, and efficiency of finding a solution of the combinatorial optimization problem may be improved. Furthermore, the data processing device 100 may reduce a time for finding the solution of the combinatorial optimization problem.

Here, as described above, it takes time to solve the combinatorial optimization problem. In the case of the exemplified packing problem, the number of arrangement methods to be considered increases explosively in combination when the number of items and the area of the region in which the items may be arranged increases. Therefore, it takes too much time to find a better solution. Furthermore, a solution of the combinatorial optimization problem that may be expressed by the QUBO may be expected to be found at high speed by the QUBO solver 200 that executes QA or SA. However, the QUBO has poor problem expression capabilities, and it is not easy to describe complicated problems. Furthermore, even when the description may be made, the number of state variables used for the problem expression may be excessive. On the other hand, the number of state variables available in the QUBO solver 200 may be limited to about several thousands to several tens of thousands. When the number of state variables used is large, the QUBO solver 200 may not be used for finding a solution. In other words, it may be difficult to accurately express shapes of items and a place where the items may be arranged by the QUBO, or the number of state variables may be too large to be handled by the QUBO solver 200. Moreover, it is difficult for a beginner user of the QUBO solver 200 to formulate a QUBO problem from scratch, and the QUBO solver 200 may not be utilized.

Thus, the data processing device 100 finds a solution of an approximation problem in a short time using the QUBO solver 200, and finds a good initial solution. Next, the data processing device 100 may shorten a time to solve the original complicated combinatorial optimization problem without approximation using the initial solution.

Furthermore, the data processing device 100 may easily create QUBO problem data by simple processing of "generating a state set for each item" and "calculating evaluation functions for each combination of states of two items", and may efficiently support formulation of a problem by a user. Furthermore, the data processing device 100 may thereby expand an available range of the QUBO solver 200.

As described above, the data processing device 100 executes the following processing.

The processor 101 acquires information indicating a problem of arranging a plurality of items in a predetermined region, in other words, problem information. The processor 101 generates, for each of the plurality of items, a plurality of states according to a position where the item is arranged in the region based on the problem information. The processor 101 specified a plurality of pairs of two items included in the plurality of items. The processor 101 calculates an evaluation function indicating an evaluation value according to a combination of states of the two items in the plurality of specified pairs. The processor 101 generates, for combinations of the states of the plurality of items, an Ising-type objective function including a cost term indicating a sum of evaluation values for each of the plurality of pairs of items indicated by the evaluation function. The processor 101 acquires a solution corresponding to the problem using the search unit that searches for a solution based on the objective function.

Therefore, the data processing device 100 may improve efficiency of finding a solution. For example, the data processing device 100 may easily formulate the problem and efficiently generate the objective function corresponding to the problem. Furthermore, the data processing device 100 may shorten a time from the formulation of the problem to obtain the solution. The QUBO solver 200 is an example of the search unit. The QUBO solver 200 may be implemented as a dedicated processor that executes QA or SA, or may be implemented by a general-purpose processor such as the processor 101 executing a program.

For example, in the generation of the plurality of states, the processor 101 may generate, based on coordinates at which each of the plurality of items is arranged and presence or absence of rotation, data representing the state of the item. Therefore, the data processing device 100 may efficiently represent variations in the arrangement of the items for the region in which the items are to be arranged.

Furthermore, in the calculation of the evaluation function, the processor 101 may calculate at least one of a first evaluation function indicating a size of overlap of the two items and a second evaluation function indicating a size of a closed region formed by the two items. Therefore, the data processing device 100 may appropriately represent conditions imposed in a packing problem, a scheduling problem, and the like in the objective function. The evaluation function E1 is an example of the first evaluation function. The evaluation function E2 is an example of the second evaluation function. Note that the processor 101 may use an evaluation function other than the first evaluation function and the second evaluation function, or may use three or more evaluation functions.

Furthermore, the processor 101 may calculate a plurality of evaluation functions in the calculation of the evaluation function. In that case, in the generation of the objective function, the processor 101 may generate an objective function including linear combination of a plurality of cost terms corresponding to the plurality of evaluation functions. Therefore, the data processing device 100 may appropriately represent a plurality of conditions imposed in a packing problem, a scheduling problem, and the like in the objective function.

Furthermore, the objective function generated by the processor 101 may include a constraint term representing that one item may take one state at the same time. Specifically, the objective function is represented by linear combination of the constraint term and the cost term. Therefore, the data processing device 100 may make it difficult for the search unit to obtain an infeasible solution in which one item takes a plurality of states at the same time. In other words, the data processing device 100 may facilitate obtainment of an feasible solution by the search unit.

Furthermore, the problem information may include a bitmap indicating each of the plurality of items and the region. Therefore, the data processing device 100 may efficiently execute the state generation of each item and the calculation of the evaluation function.

Moreover, the processor 101 may generate the problem information by bitmapping the shapes of the plurality of items and the shape of the region in another problem that is the original of the problem. In this case, the another problem may be said to be the original problem. The problem obtained by bitmapping the shapes of the plurality of items and the shape of the region in the original problem may be said to be an approximation problem. When a solution corresponding to the problem (approximation problem) is acquired from the search unit, the processor 101 may generate an initial solution of the another problem (original problem) based on the solution and find a solution of the another problem (original problem) using the initial solution.

Therefore, the data processing device 100 may give a better initial solution to the another problem, in other words, the original problem, and may shorten a time for the solution finding processing for the original problem.

Note that the information processing of the first embodiment may be implemented by causing the processing unit 12 to execute a program. Furthermore, the information processing of the second embodiment may be implemented by causing the processor 101 to execute the program. The program may be recorded in the computer-readable recording medium 113.

For example, the program may be distributed by distributing the recording medium 113 in which the program is recorded. Furthermore, the program may be stored in another computer and distributed through a network. For example, a computer may store (install), in a storage device such as the RAM 102 or the HDD 103, the program recorded in the recording medium 113 or received from another computer, and read the program from the storage device to execute the program.

**Claims**

1. A data processing program comprising instructions which, when executed by a computer, cause the computer to execute processing comprising:

   acquiring information that indicates a problem of arranging a plurality of items in a predetermined region;
   generating, for each of the plurality of items, a plurality of states according to a position at which the item is arranged in the area based on the information;
   specifying a plurality of pairs of two items included in the plurality of items, and calculating an evaluation function that indicates an evaluation value according to a combination of states of the two items in the plurality of specified pairs;
   generating, for combinations of the states of the plurality of items, an Ising-type objective function that includes a cost term that indicates a sum of the evaluation values of each of the plurality of pairs indicated by the evaluation function; and
   acquiring a solution that corresponds to the problem by using a search unit that searches for the solution based on the objective function.

2. The data processing program according to claim 1, the processing further comprising:
   generating, in the generation of the plurality of states, data that represents the states by coordinates at which each of the plurality of items is arranged and presence or absence of rotation.

3. The data processing program according to claim 1, the processing further comprising:
   calculating, in the calculating of the evaluation function, a first evaluation function that indicates a size of overlap of the two items or a second evaluation function that indicates a size of a closed region formed by the two items, or any combination of the first evaluation function or the second evaluation function.

4. The data processing program according to claim 1, the processing further comprising:

calculating, in the calculating of the evaluation function, a plurality of evaluation functions; and
generating, in the generating of the objective function, the objective function that includes linear combination of a plurality of cost terms that corresponds to the plurality of evaluation functions.

5. The data processing program according to claim 1, wherein
the objective function includes a constraint term that represents that one item is capable of taking one state at the same time.

6. The data processing program according to claim 1, wherein
the information includes a bitmap that indicates each of the plurality of items and the region.

7. The data processing program according to claim 6, the processing further comprising:

generating the information by bitmapping the shapes of the plurality of items and the shape of the region in another problem that is an original of the problem; and
generating, when the solution that corresponds to the problem is acquired, an initial solution of the another problem based on the solution, and finding a solution of the another problem by using the initial solution.

8. A data processing method implemented by a computer, the data processing method comprising:

acquiring information that indicates a problem of arranging a plurality of items in a predetermined region;
generating, for each of the plurality of items, a plurality of states according to a position at which the item is arranged in the area based on the information;
specifying a plurality of pairs of two items included in the plurality of items, and calculating an evaluation function that indicates an evaluation value according to a combination of states of the two items in the plurality of specified pairs;
generating, for combinations of the states of the plurality of items, an Ising-type objective function that includes a cost term that indicates a sum of the evaluation values of each of the plurality of pairs indicated by the evaluation function; and
acquiring a solution that corresponds to the problem by using a search unit that searches for the solution based on the objective function.

9. A data processing device comprising:

a storage unit configured to store information that indicates a problem of arranging a plurality of items in a predetermined region;
a processing unit configured to perform processing including:

generating, for each of the plurality of items, a plurality of states according to a position at which the item is arranged in the area based on the information;
specifying a plurality of pairs of two items included in the plurality of items, and calculating an evaluation function that indicates an evaluation value according to a combination of states of the two items in the plurality of specified pairs;
generating, for combinations of the states of the plurality of items, an Ising-type objective function that includes a cost term that indicates a sum of the evaluation values of each of the plurality of pairs indicated by the evaluation function; and
acquiring a solution that corresponds to the problem by using a search unit that searches for the solution based on the objective function.

# FIG. 1

# FIG. 2

1

100

DATA PROCESSING DEVICE

| 101 | | 104 | |
|-----|---|-----|---|
| PROCESSOR | | GPU | 111 |

| 102 | | 105 | |
|-----|---|-----|---|
| RAM | | INPUT INTERFACE | 112 |

| 103 | | 106 | |
|-----|---|-----|---|
| HDD | | MEDIUM READER | 113 |

| | 107 | |
|---|-----|---|
| | COMMUICATION INTERFACE | NETWORK 114 |

| | 108 | |
|---|-----|---|
| | COUPLING INTERFACE | QUBO SOLVER 200 |

BUS

# FIG. 3

PLURALITY OF ITEMS

SIZE OF ARRANGEMENT REGION

# FIG. 4

# FIG. 5

# FIG. 6

```
        START
          │
          ▼                        S10
┌─────────────────────────────────┐
│ ACQUIRE INPUT DATA OF COMBINATORIAL │
│     OPTIMIZATION PROBLEM          │
└─────────────────────────────────┘
          │
          ▼                        S11
┌─────────────────────────────────┐
│  SOLUTION FINDING PROCESSING OF   │
│     APPROXIMATION PROBLEM         │
└─────────────────────────────────┘
          │
          ▼                        S12
┌─────────────────────────────────┐
│   FIND SOLUTION OF COMBINATORIAL  │
│ OPTIMIZATION PROBLEM USING SOLUTION │
│ OF APPROXIMATION PROBLEM AS INITIAL │
│           SOLUTION                │
└─────────────────────────────────┘
          │
          ▼                        S13
┌─────────────────────────────────┐
│        OUTPUT SOLUTION            │
└─────────────────────────────────┘
          │
          ▼
         END
```

# FIG. 7

```
       ┌─────────────────────────────┐
       │  START SOLUTION FINDING     │
       │      PROCESSING OF          │
       │  APPROXIMATION PROBLEM      │
       └─────────────────────────────┘
                     │
                     ▼            ⌐ S20
       ┌─────────────────────────────┐
       │ PERFORM DATA CONVERSION OF ITEMS │
       └─────────────────────────────┘
                     │
                     ▼            ⌐ S21
       ┌─────────────────────────────┐
       │   GENERATE STATES OF ITEMS  │
       └─────────────────────────────┘
                     │
                     ▼            ⌐ S22
       ┌─────────────────────────────┐
       │ CALCULATE EVALUATION FUNCTIONS │
       │     BETWEEN ALL TWO ITEMS    │
       └─────────────────────────────┘
                     │
                     ▼            ⌐ S23
       ┌─────────────────────────────┐
       │ GENERATE INPUT DATA OF QUBO PROBLEM │
       └─────────────────────────────┘
                     │
                     ▼            ⌐ S24
       ┌─────────────────────────────┐
       │ FIND SOLUTION OF QUBO PROBLEM BY │
       │         QUBO SOLVER          │
       └─────────────────────────────┘
                     │
                     ▼            ⌐ S25
       ┌─────────────────────────────┐
       │ SELECT SOLUTION OF QUBO PROBLEM │
       └─────────────────────────────┘
                     │
                     ▼
                ┌─────────┐
                │   END   │
                └─────────┘
```

# FIG. 8

FIG. 9

FIG. 10

STATE SET

ITEM i

(i, 0) (i, 1) (i, 2) (i, 3)
(i, 4)

61

(i, p)

CALCULATE VALUE OF
EVALUATION FUNCTION

E1((i, p), (j, q))
E2((i, p), (j, q))
...

ITEM j

(j, 0) (j, 1) (j, 2) (j, 3)
(j, 4) (j, 5) (j, 6) (j, 7)

62

(j, q)

# FIG. 11

E1((a, 1, 1, 0), (b, 3, 1, 0)) = 12
E2((a, 1, 1, 0), (b, 3, 1, 0)) = 0

# FIG. 12

E1((a, 1, 1, 0), (b, 5, 4, 0)) = 1
E2((a, 1, 1, 0), (b, 5, 4, 0)) = 2

## FIG. 13

ITEM 1
STATE GENERATION RULE
THE NUMBER OF STATES, RANGE, AND
RANDOM NUMBER DISTRIBUTION
90-1

ITEM 2
STATE GENERATION RULE
THE NUMBER OF STATES, RANGE, AND
RANDOM NUMBER DISTRIBUTION
90-2

...

ITEM N
STATE GENERATION RULE
THE NUMBER OF STATES, RANGE, AND
RANDOM NUMBER DISTRIBUTION
90-N

STATE SET OF ITEM 1
91-1

STATE SET OF ITEM 2
91-2

...
REPETITIVE
PROCESSING $\beta$

STATE SET OF ITEM N
91-N

ALL COMBINATIONS
OBTAINED BY
EXTRACTING ONE BY
ONE FROM TWO SETS

REPETITIVE
PROCESSING $\alpha$

COMBINATIONS
OF ALL TWO SETS

EVALUATION
FUNCTIONS E1, E2, ...

EVALUATION
FUNCTIONS E1, E2, ...

...

one hot
CONSTRAINT

CONSTRAINT
CONDITION

one hot
CONSTRAINT

CONSTRAINT
CONDITION

...

one hot
CONSTRAINT

92

QUBO PROBLEM DATA

QUBO SOLVER
200

SOLUTION OF
APPROXIMATION PROBLEM

EP 4 488 885 A1

# FIG. 14

301 302 303 304 305 306 307

32

# FIG. 15

ITEM SET

300

12

400

ARRANGEMENT
REGION

11

# FIG. 16

# FIG. 17

ITEM SET

ARRANGEMENT
REGION

300a

400a

11

8

# FIG. 18

FIG. 19

| | | 0:00 | 8:00 | 17:00 | 23:00 |

STATE SPACE

EMPLOYEE A
or
DEVICE A

Mon
Tue
Wed
Thu
Fri
Sat
Sun

EMPLOYEE B or DEVICE B

EMPLOYEE C or DEVICE C

SELECT
OPTIMAL
OBJECT

FIG. 20

STATE SPACE

TRUCK    A

TRUCK    B

TRUCK    C

SELECT
OPTIMAL
OBJECT

Europäisches
Patentamt

European
Patent Office

Office européen
des brevets

**EUROPEAN SEARCH REPORT**

Application Number

EP 24 18 3353

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FUKADA KEISUKE ET AL: "A Three-Stage Annealing Method Solving Slot-Placement Problems Using an Ising Machine", IEEE ACCESS, IEEE, USA, vol. 9, 28 September 2021 (2021-09-28), pages 134413-134426, XP011882087, DOI: 10.1109/ACCESS.2021.3116038 [retrieved on 2021-10-04] * figures 4, 5 * * section I-B, lines 2-4 * * section III, lines 5-9 * * section III, lines 14-18 * * section III, lines 22-25 * * section IV-B-1 * * section VI-A-1 * * equations (1)-(2) * | 1-9 | INV. G06N5/01 G06N10/60 |
| A | KANAMARU SHO ET AL: "Solving Constrained Slot Placement Problems Using an Ising Machine and Its Evaluations", IEICE TRANSACTIONS ON INFORMATION AND SYSTEMS, vol. E104.D, no. 2, 1 February 2021 (2021-02-01), pages 226-236, XP093227384, JP ISSN: 0916-8532, DOI: 10.1587/transinf.2019EDP7254 * the whole document * | 1-9 | |

TECHNICAL FIELDS SEARCHED (IPC)

G06N

The present search report has been drawn up for all claims

| Place of search | Date of completion of the search | Examiner |
|---|---|---|
| The Hague | 24 November 2024 | Aoun, Marc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................
& : member of the same patent family, corresponding document

EPO FORM 1503 03.82 (P04C01)

**EP 4 488 885 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022118555 A
- US 20220164644
- US 20200202249
- JP 2022079376 A